# FASCICULE DE BREVET EUROPEEN

(11) **EP 1 816 715 B1**
(45) Date de publication et mention de la délivrance du brevet: **14.08.2013**
(21) Numéro de dépôt: 07290111.9
(22) Date de dépôt: 29.01.2007
(51) Int. Cl.: H02B 1/32

(54) **Support de rail de montage d'appareillages électriques modulaires et coffret de distribution comprenant un tel support**
Montageschieneträger für modulare elektrische Geräte und elektrischer Verteiler mit einem solchen Träger
Support of a mounting rail for modular electrical devices and distribution cabinet comprising such support

(30) Priorité: 01.02.2006 FR 0600908
(43) Date de publication de la demande: 08.08.2007
(73) Titulaire: Legrand France, 87000 Limoges (FR); Legrand SNC, 87000 Limoges (FR)
(72) Inventeur: Araujo, Fernando, 87350 Panazol (FR); Mazabraud, Pierre, 87170 Isle (FR)
(74) Mandataire: Orsini, Fabienne

(56) Documents cités:
- DE-A1- 2 944 372

## Description

La présente invention concerne de manière générale les coffrets ou tableaux de distribution électrique.

Elle concerne plus particulièrement un support d'un rail de montage d'appareillages électriques modulaires, comprenant des moyens de montage sur le fond d'un socle d'un coffret ou d'un tableau de distribution électrique.

### ARRIERE-PLAN TECHNOLOGIQUE

Généralement les coffrets de distribution comportent un socle et un capot rapporté sur le socle pour former une boîte étanche.

Le socle porte sur des rails parallèles des appareillages électriques modulaires. Les rails sont montés sur des supports à des hauteurs définies afin de permettre le passage du câblage sous les rails.

Les coffrets de distribution se déclinent en plusieurs dimensions, leur largeur correspondant au nombre d'appareillages électriques modulaires pouvant être rapportés sur les rails et leur longueur correspondant au nombre de rails espacés dans le coffret.

Actuellement, on connaît un coffret de distribution du type précité dans lequel les supports sont fixés aux moyens de vis ou de clip sur le fond du socle du coffret. Certains de ces supports autorisent une modification de l'écartement de deux rangées parallèles du coffret, mais cela suppose un démontage des supports en place sur le socle du coffret pour les repositionner à l'endroit souhaité.

Par ailleurs, on connaît du document DE 29 44 372 un support de rail de montage d'appareillages électriques, qui comprend à son sommet une plate-forme support de rail et à sa base un pied formant une glissière enfilée dans une rainure fixée sur le fond d'un socle d'un coffret de distribution électrique.

Cette disposition qui permet de déplacer par coulissement le support sur le socle pour le positionner à l'endroit considéré, présente comme inconvénient principal d'être complexe à mettre en oeuvre car chaque support doit être enfilé par une extrémité de la rainure prévue sur le socle ce qui n'est pas facile, voire impossible, à réaliser lorsque le socle est fixé sur la paroi de réception verticale du fait qu'il n'y a pas d'espace disponible autour dudit socle.

### OBJET DE L'INVENTION

Par rapport à l'état de la technique précité, la présente invention propose un nouveau support de rails qui se monte facilement sur le socle d'un coffret de distribution fixé à une paroi verticale, qui est déplaçable sur le socle et qui présente de multiples possibilités de montage de rails pour adapter l'agencement des rails d'un coffret aux dimensions des appareillages électriques modulaires à rapporter sur ces rails.

Plus particulièrement, selon l'invention, il est proposé un support tel que défini dans la revendication 1.

Ainsi, avantageusement, grâce aux moyens de glissement, le support selon l'invention monté sur le fond d'un socle de coffret peut, sans démontage, être facilement déplacé par glissement sur une certaine distance afin d'ajuster la position du rail qu'il supporte dans ledit coffret.

En particulier, on peut alors facilement ajuster l'écartement de deux rails d'un coffret au type d'appareillages électriques modulaires à rapporter sur ces rails.

D'autres caractéristiques avantageuses et non limitatives du support selon l'invention sont définies dans les sous-revendications 2 à 17.

La présente invention propose également un coffret ou tableau de distribution électrique comprenant un socle dont le fond est pourvu de deux nervures longitudinales disposées le long des deux bords longitudinaux pour le montage à coulissement d'un support tel que précité.

Avantageusement, ledit socle peut comprendre une nervure longitudinale centrale.

Selon une autre caractéristique avantageuse du coffret conforme à l'invention, le fond du socle comprend entre chaque bord longitudinal et chaque nervure longitudinale associée des marquages d'indication des différentes positions d'écartement des supports de rail.

Selon une autre caractéristique avantageuse du coffret conforme à l'invention, il comporte des capots de fermeture adaptés à se monter selon deux positions inversées sur ledit socle.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un fond de coffret muni de rails de montage d'appareillages modulaires supportés par des supports selon l'invention ;
- la figure 2 est une vue en perspective d'un côté d'un support de rail selon l'invention ;
- la figure 3 est une vue en perspective d'un autre côté du support de la figure 1 ;
- la figure 4 est une vue en perspective du dessous du support de la figure 1 ;
- la figure 5 est une vue en bout du support de la figure 1 ;
- la figure 6 représente en perspective un rail dix-huit modules monté sur des supports selon l'invention;
- la figure 7 représente en perspective une autre configuration de rails montés sur des supports selon l'invention ; et
- la figure 8 représente en perspective une autre configuration de rails montés sur des supports selon l'invention.

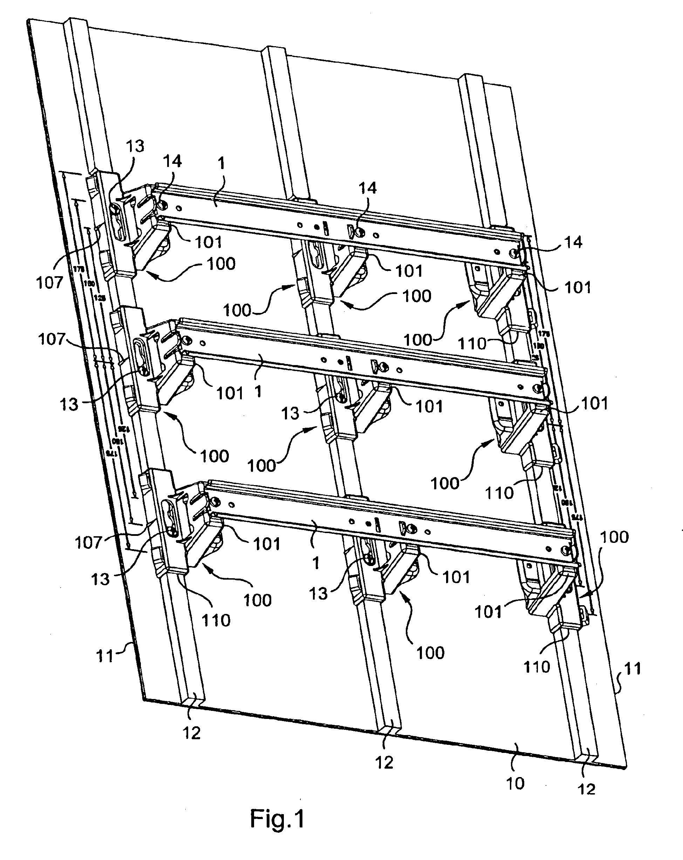

Sur la figure 1, on a représenté un coffret ou tableau électrique qui comporte un socle 10, ici un socle plat, destiné à être recouvert par un capot (non représenté) de façon à former une boîte étanche.

Le coffret renferme des appareillages électriques modulaires (non représentés) qui sont installés sur des rails 1 parallèles fixés sur des supports 100 montés sur le socle 10 du coffret. En particulier, le capot (non représenté) du coffret recouvre les appareillages électriques modulaires, il laisse apparaître la façade de ces appareillages au travers d'une fenêtre recouverte d'un volet transparent monté à pivotement sur ledit capot.

Les rails 1 forment dans le coffret des rangées d'appareillages électriques modulaires parallèles, espacées les unes des autres. L'écartement des rails entre eux dépend de la largeur des appareillages électriques à rapporter sur ceux-ci.

Par rangée, il est prévu deux ou trois supports 100 (deux supports d'extrémité et un support intermédiaire) en fonction de la longueur du rail à supporter.

Les rails 1 sont positionnés à des hauteurs déterminées sur les supports 100 afin de permettre le passage des câbles sous ces rails pour alimenter électriquement les appareillages électriques modulaires.

Le coffret représenté sur la figure 1 est un coffret de largeur dix-huit modules, c'est-à-dire que les rails 1 sont capables de recevoir une rangée de dix-huit appareillages électriques modulaires positionnés côte à côte.

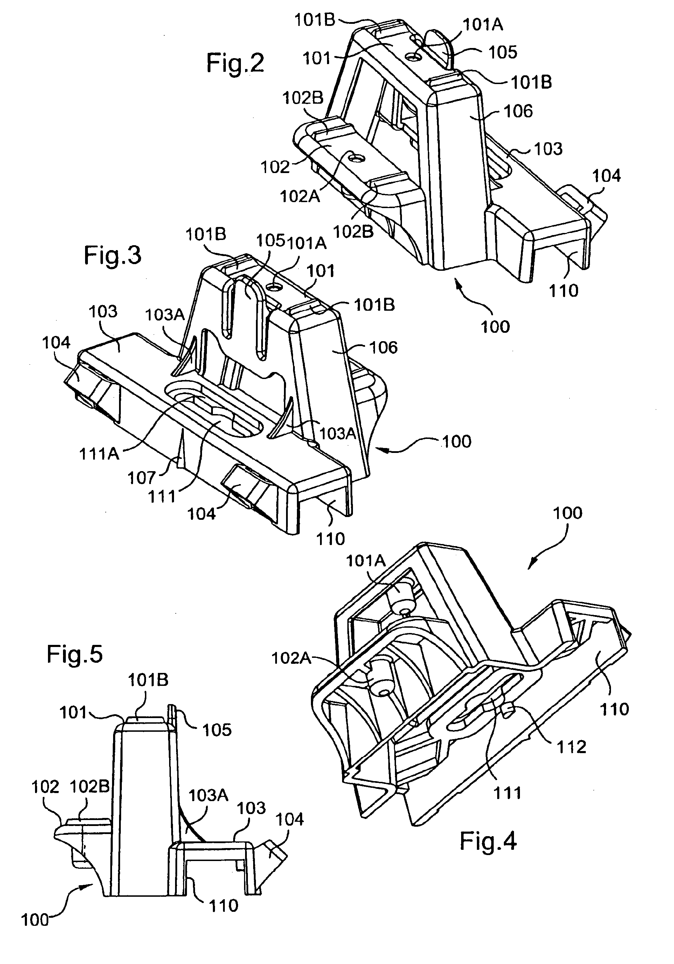

Sur les figures 2 à 5 on a représenté plus particulièrement un des supports 100 rapporté sur le socle 10 du coffret représenté sur la figure 1.

Ce support 100, destiné à recevoir un rail de montage d'appareillage électrique modulaire, comprend des moyens de montage sur le socle qui comportent avantageusement des moyens de glissement adaptés à coopérer avec des moyens de glissement complémentaires prévus sur le fond du socle 10.

Ici, les moyens de glissement du support 100 comprennent une rainure 110 formant glissière adaptée à coulisser sur une nervure 12 prévue sur le fond du socle 10. La rainure 110 est formé par l'intérieur d'un profilé à section en U.

Pour le montage des supports 100, comme le montre plus particulièrement la figure 1, le fond du socle 10 est pourvu de deux nervures 12 longitudinales disposées le long de deux bords longitudinaux 11 du socle. Selon l'exemple représenté, il comprend également une nervure 12 longitudinale centrale, parallèle aux deux autres nervures 12.

Ainsi, avantageusement, grâce aux moyens de glissement, les supports 100 sont montés aisément sur le socle du coffret, à n'importe quel endroit de celui-ci, et peuvent, sans démontage, être facilement déplacés par glissement sur une certaine distance afin d'ajuster l'écartement des rails du coffret aux types d'appareillages électriques modulaires à rapporter sur ces rails.

Avantageusement, le ou les capots de fermeture du coffret sont adaptés à se monter sur le socle 10 selon deux positions inversées de manière que leur volet transparent se trouve toujours positionné au droit des façades des appareillages électriques modulaires d'une rangée quelle que soit la position du rail correspondant sur le socle du coffret.

Comme le montrent plus particulièrement, les figures 2 à 5 les moyens de montage du support 100 comprennent, dans le profilé formant ladite rainure 110, une ouverture traversante 111 allongée pour le passage d'un corps fileté d'une vis de fixation 13 vissée dans le fond du socle 10 (voir figure 1).

Cette ouverture traversante 111 allongée est bordée d'un rebord 111A d'appui de la tête de ladite vis de fixation 13.

Selon le mode de réalisation du support 100 représenté sur les figures 2 à 5, l'ouverture traversante 111 allongée présente une forme globalement oblongue avec une partie médiane élargie circulaire pour le passage de la tête de la vis de fixation 13.

La longueur de l'ouverture traversante 111 allongée correspond au pas de déplacement autorisé du support 100 sur le fond du socle. Ici, l'ouverture traversante 111 allongée présente une longueur égale à 25 millimètres.

Lors du déplacement de chaque support 100, le bord de l'ouverture traversante 111 glisse sur le corps fileté de la vis de fixation 13 vissée dans le fond du socle qui passe d'un appui contre une extrémité de l'ouverture traversante 111 à un appui contre l'autre extrémité de l'ouverture traversante 111 du support 100.

Avantageusement, le support 100 comporte des moyens d'indexation de sa position sur le fond du socle 10.

Ici ces moyens d'indexation comprennent sur la face intérieure d'une paroi latérale longitudinale du profilé formant la rainure 110, un plot 112 destiné à s'engager élastiquement dans une encoche (non représentée) prévue sur un bord de la nervure 12 correspondante prévue sur le fond du socle 10.

Le support 100 porte sur la face extérieure de ladite paroi latérale longitudinale du profilé formant la rainure 110 une flèche 107 indicatrice de sa position sur le fond du socle.

En correspondance, le fond du socle 10 comprend entre chaque bord longitudinal 11 et chaque nervure 12 longitudinale associée des marquages d'indication des différentes positions d'écartement des supports 100 de rails (voir figure 1).

Ici, grâce à ses moyens de montage, chaque support 100 peut être positionné selon trois positions différentes écartées d'un pas de 25 millimètres correspondant à la longueur de l'ouverture traversante 111.

Ainsi, comme le montrent les marquages du fond du socle 10 de la figure 1, deux rangées du coffret peuvent être écartées l'une de l'autre selon trois écartement différents : 125,150 et 175 millimètres.

Il suffit pour cela de déplacer les supports des rangées pour placer leur flèche indicatrice 107 en face de la marque correspondante à l'écartement souhaité.

En outre, selon une caractéristique avantageuse du support 100 représenté sur les figures 2, 3, 4 et 5, il porte sur la face extérieure de la paroi latérale longitudinale du profilé formant la rainure 110, deux anses 104 d'enfilage d'un collier de serrage de câbles électriques.

Le support 100 comporte ici trois plates-formes 101,102,103 support de rails, positionnées à trois hauteurs différentes, à savoir une plate-forme supérieure 101, une plate-forme intermédiaire 102 et une plate-forme inférieure 103.

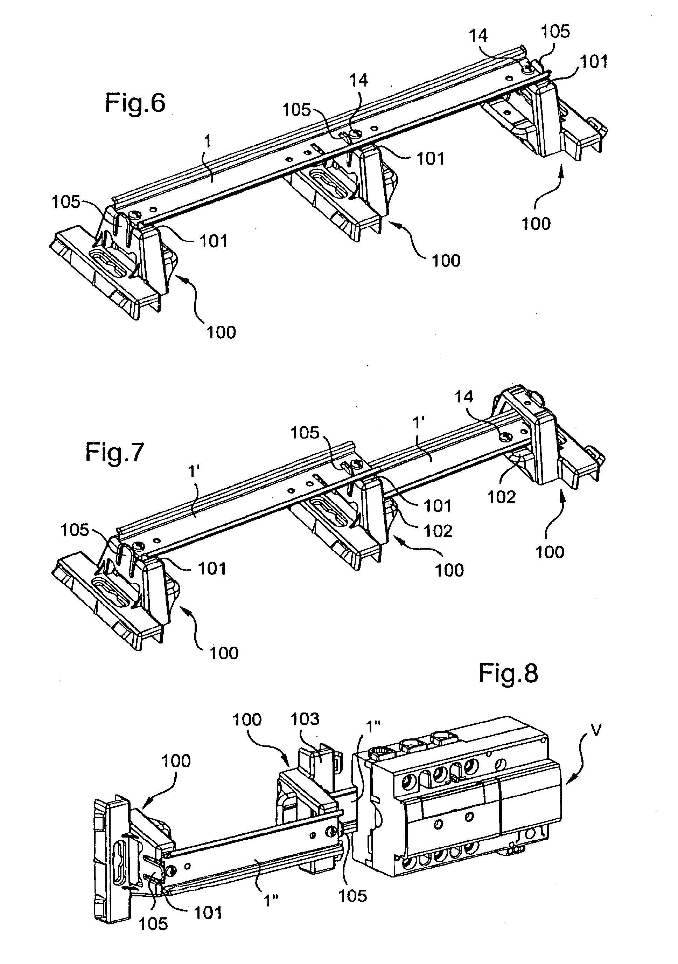

La plate-forme intermédiaire 102 est située sur un côté latéral du support 100 tandis que la plate-forme inférieure 103 est située de l'autre côté latéral opposé du support 100. Avantageusement, la plate-forme inférieure 103 est formée par le dessus du profilé formant la rainure 110 du support 100 et le rebord 111A d'appui de la tête de ladite vis de fixation 13 qui borde l'ouverture traversante 111 allongée, prévue dans le fond du profilé, est situé en retrait par rapport au dessus du profilé (voir figure 3) pour que la tête de la vis de fixation 13 en appui sur ledit rebord 111A ne fasse pas saillie de ladite plate-forme inférieure 103 et ne gêne pas la mise en place éventuelle d'un rail 1" de montage d'appareillages électriques (voir figure 8).

La plate-forme supérieure 101 est située au sommet d'une arche 106 de part et d'autre de laquelle s'étendent les plates-formes intermédiaire 102 et inférieure 103.

Il est prévu des moyens de positionnement des rails sur les différentes plates-formes 101,102,103.

Ces moyens de positionnement comprennent des moyens de guidage latéral et des moyens de butée axiale.

Les moyens de guidage latéral comprennent deux nervures latérales 101B,102B et 103A placées de part et d'autre d'un puit taraudé 101A,102A prévu dans la plate-forme 101,102 correspondante pour le vissage d'une vis de fixation 14 du rail.

Les moyens de butée axiale comprennent une languette 105 ou une paroi de butée située sur un bord de chaque plate-forme 101,102,103.

Avantageusement, le support 100 est formé d'une seule pièce monobloc par moulage d'une matière plastique.

Grâce aux différentes plates-formes de chaque support 100, on peut agencer sur le fond du socle 10 du coffret différents agencements de rails correspondants à des hauteurs différentes d'appareillages électriques modulaires à rapporter sur lesdits rails.

En particulier, comme le montre les figures 1 et 6, on peut monter sur chacune des trois nervures 12 du fond du socle 10, trois supports 100 qui reçoivent sur leur plate-forme supérieure 101 un rail 1 s'étendant sur toute la largeur du coffret.

Ce rail 1 est destiné à recevoir une rangée de dix-huit appareillages électriques modulaires accolés. Il est bloqué axialement à chacune de ses extrémités par les languettes 105 prévues sur les deux supports 100 d'extrémité 100. Il est également maintenu dans sa partie médiane par la languette 105 du support 100 médian qui s'engage dans une fente correspondante du rail 1. Il est fixé sur les supports 100 par des vis de fixation 14 engagées dans les puits taraudés 101A correspondantes des plates-formes supérieures 101.

Sur la figure 7, on a représenté un deuxième agencement de deux rails 1' sur trois supports 100 positionnés comme sur la figure 6. Les rails 1' sont réalisés par découpage du rail 1. Selon cet agencement, un premier rail 1' est placé sur les plates-formes supérieures 101 d'un support 100 d'extrémité et du support 100 intermédiaire et le deuxième rail 1' est placé sur les plates-formes intermédiaires 102 du support 100 intermédiaire et de l'autre support 100 d'extrémité.

Sur la figure 8 on a représenté un troisième agencement de deux rails 1" pour permettre le positionnement sur un rail 1" d'un appareillage électrique modulaire de grande hauteur V appelé « vistop ». Selon cet agencement un des deux rails 1" est positionné au plus bas sur la plate-forme inférieure 103 du support 100 intermédiaire qui est retourné par rapport à son positionnement suivant les configurations représentées sur les figures 6 et 7. L'autre rail 1" reste positionnée sur les plates-formes supérieures 101 du support 100 intermédiaire et d'un support 100 d'extrémité.

## Revendications

1. Support (100) d'un rail de montage d'appareillages électriques modulaires, comprenant, d'une part, des moyens de montage (110,111) sur le fond d'un socle (10) d'un coffret ou d'un tableau de distribution électrique, ces moyens de montage comprenant des moyens de glissement (110) adaptés à coopérer avec des moyens de glissement complémentaires (12) prévus sur le fond du socle (10), et, d'autre part, au moins deux plates-formes (101,103) support de rail positionnées à deux hauteurs différentes, **caractérisé en ce qu'**il comporte un profilé à section en U dont l'intérieur forme une rainure (110) adaptée à coulisser sur une nervure (12) prévue sur le fond du socle (10) et dont le dessus forme une plate-forme inférieure (103) support de rail située sur un côté latéral du support.

2. Support (100) selon l'une des revendications précédentes, **caractérisé en ce que** lesdits moyens de montage comprennent une ouverture traversante (111) allongée pour le passage d'un corps fileté d'une vis de fixation (13) vissée dans le fond du socle, ladite ouverture traversante (111) allongée étant bordée par un rebord (111A) d'appui de la tête de ladite vis de fixation.

3. Support (100) selon la revendication 2, **caractérisé en ce que** ladite ouverture traversante (111) allongée présente une forme globalement oblongue avec une partie médiane élargie circulaire pour le passage de la tête de la vis de fixation.

4. Support (100) selon l'une des revendications 2 et 3, **caractérisé en ce que** la longueur de ladite ouverture traversante (111) allongée correspond au pas de déplacement du support (100) sur le fond du socle (10).

5. Support (100) selon la revendication 4, **caractérisé en ce que** ladite ouverture traversante (111) allongée présente une longueur égale à 25 mm.

6. Support (100) selon l'une des revendications précédentes, **caractérisé en ce qu'**il comprend des moyens d'indexation de sa position sur le fond du socle.

7. Support (100) selon la revendication 6, **caractérisé en ce que** lesdits moyens d'indexation comprennent un plot (112) adapté à s'engager élastiquement dans une encoche prévue sur le fond du socle.

8. Support (100) selon l'une des revendications précédentes, **caractérisé en ce qu'**il porte sur une face extérieure une flèche (107) indicatrice de sa position sur le fond du socle.

9. Support (100) selon l'une des revendications précédentes, **caractérisé en ce qu'**il porte sur un bord au moins une anse (104) d'enfilage d'un collier de serrage de câbles électriques.

10. Support (100) selon l'une des revendications précédentes, **caractérisé en ce qu'**il comprend trois plates-formes (101,102,103) support de rail positionnées à trois hauteurs différentes, à savoir une plate-forme supérieure (101), une plate-forme intermédiaire (102) et une plate-forme inférieure (103).

11. Support (100) selon la revendication 10, **caractérisé en ce que** la plate-forme intermédiaire (102) est située sur un côté latéral du support tandis que la plate-forme inférieure (103) est située sur l'autre côté latéral opposé du support.

12. Support selon l'une des revendications précédentes, **caractérisé en ce que** la plate-forme supérieure (101) est située au sommet d'une arche (106).

13. Support (100) selon l'une des revendications précédentes, **caractérisé en ce qu'**il est prévu des moyens de positionnement des rails sur lesdites plates-formes.

14. Support (100) selon la revendication 13, **caractérisé en ce que** lesdits moyens de positionnement comprennent des moyens de guidage latéral et des moyens de butée axiale.

15. Support (100) selon la revendication 14, **caractérisé en ce que** lesdits moyens de guidage latéral comprennent deux nervures latérales (101B,102B,103A) positionnées de part et d'autre d'un puits taraudé (101A,102A) pour le vissage d'une vis de fixation (14).

16. Support (100) selon l'une des revendications 14 et 15, **caractérisé en ce que** les moyens de butée axiale comprennent une languette (105) ou une paroi de butée située sur un bord de chaque plate-forme.

17. Support (100) selon l'une des revendications précédentes, **caractérisé en ce qu'**il est formé d'une seule pièce monobloc par moulage d'une matière plastique.

18. Coffret ou tableau de distribution électrique comprenant un socle (10) dont le fond est pourvu de deux nervures (12) longitudinales disposées le long des deux bords longitudinaux (11) pour le montage à coulissement d'un support selon l'une des revendications précédentes.

19. Coffret ou tableau selon la revendication 18, dans lequel il est prévu une nervure (12) longitudinale centrale.

20. Coffret ou tableau selon l'une des revendications 18 et 19, dans lequel le fond du socle (10) comprend entre chaque bord longitudinal et chaque nervure longitudinale associée des marquages d'indication des différentes positions d'écartement des supports de rail.

21. Coffret ou tableau selon l'une des revendications 18 à 20, **caractérisé en ce qu'**il comporte des capots de fermeture adaptés à se monter selon deux positions inversées sur ledit socle.

## Patentansprüche

1. Halterung (100) für eine Montageschiene für bausteinartige elektrische Geräte, die einerseits Montagemittel (110,111) auf dem Boden eines Sockels (10) eines elektrischen Verteilerkastens bzw. einer elektrischen Verteilertafel umfasst, wobei diese Montagemittel Gleitmittel (110) zum Zusammenwirken mit ergänzenden Gleitmitteln (12) auf dem Boden des Sockels (10) umfassen, sowie andererseits mindestens zwei Plattformen (101,103) als Schienenhalterung, die auf zwei verschiedenen Höhen positioniert sind, **dadurch gekennzeichnet, dass** sie ein U-Profil umfasst, dessen Innenseite eine Nut (110) bildet, die auf einer am Boden des Sockels (10) vorgesehenen Rippe (12) gleiten kann und dessen Oberseite eine untere Plattform (103) als Schienenhalterung bildet, die sich auf einer seitlichen Seite der Halterung befindet.

2. Halterung (100) nach vorausgehendem Anspruch, **dadurch gekennzeichnet, dass** die Montagemittel eine längliche durchgehende Öffnung (111) für das Durchführen eines Gewindes einer in den Boden des Sockels geschraubten Befestigungsschraube (13) umfassen, wobei die längliche durchgehende Öffnung (111) von einem Stützrand (111A) des Kopfes der Befestigungsschraube umrandet ist.

3. Halterung (100) nach Anspruch 2, **dadurch gekennzeichnet, dass** die längliche durchgehende Öffnung (111) im Wesentlichen eine Langlochform mit einem mittleren erweiterten runden Bereich zum Durchführen des Kopfes der Befestigungsschraube aufweist.

4. Halterung (100) nach einem der Ansprüche 2 und 3, **dadurch gekennzeichnet, dass** die Länge der länglichen durchgehenden Öffnung (111) der Bewegungsbreite der Halterung (100) auf dem Boden des Sockels (10) entspricht.

5. Halterung (100) nach Anspruch 4, **dadurch gekennzeichnet, dass** die längliche durchgehende Öffnung (111) eine Länge von 25 mm aufweist.

6. Halterung (100) nach einem der vorausgehenden Ansprüche, **dadurch gekennzeichnet, dass** sie Indexiermittel ihrer Position auf dem Boden des Sockels umfasst.

7. Halterung (100) nach Anspruch 6, **dadurch gekennzeichnet, dass** die Indexiermittel einen Stift (112) umfassen, der federnd in eine im Boden des Sockels vorgesehene Kerbe eingreifen kann.

8. Halterung (100) nach einem der vorausgehenden Ansprüche, **dadurch gekennzeichnet, dass** sie an einer Außenseite einen Anzeigepfeil (107) für ihre Position im Boden des Sockels aufweist.

9. Halterung (100) nach einem der vorausgehenden Ansprüche, **dadurch gekennzeichnet, dass** sie an einem Rand mindestens eine Aufreihschlinge (104) für einen Kabelbinder für elektrische Kabel hat.

10. Halterung (100) nach einem der vorausgehenden Ansprüche, **dadurch gekennzeichnet, dass** sie drei Plattformen (101, 102, 103) als Schienenhalterung umfasst, die auf drei verschiedenen Höhen positioniert sind, nämlich eine obere Plattform (101), eine mittlere Plattform (102) und eine untere Plattform (103).

11. Halterung (100) nach Anspruch 10, **dadurch gekennzeichnet, dass** sich die mittlere Plattform (102) an einer seitlichen Seite der Halterung befindet, während sich die untere Plattform (103) auf der anderen entgegengesetzten seitlichen Seite der Halterung befindet.

12. Halterung nach einem der vorausgehenden Ansprüche, **dadurch gekennzeichnet, dass** sich die obere Plattform (101) an der höchsten Stelle eines Bogens (106) befindet.

13. Halterung (100) nach einem der vorausgehenden Ansprüche, **dadurch gekennzeichnet, dass** auf diesen Plattformen Positionierungsmittel für Schienen vorgesehen sind.

14. Halterung (100) nach Anspruch 13, **dadurch gekennzeichnet, dass** diese Positionierungsmittel seitliche Führungsmittel und axiale Anschlagmittel umfassen.

15. Halterung (100) nach Anspruch 14, **dadurch gekennzeichnet, dass** diese seitlichen Führungsmittel zwei seitliche Rippen (101 B, 102B, 103A) umfassen, die auf beiden Seiten eines Gewindelochs (101A, 102A) zum Einschrauben einer Befestigungsschraube (14) angeordnet sind.

16. Halterung (100) nach einem der Ansprüche 14 und 15, **dadurch gekennzeichnet, dass** die axialen Anschlagmittel eine Lasche (105) oder eine Anschlagwand an einem Rand jeder Plattform umfassen.

17. Halterung (100) nach einem der vorausgehenden Ansprüche, **dadurch gekennzeichnet, dass** sie aus einem einzigen aus Kunststoff gegossenen Teil geformt ist.

18. Elektrischer Verteilerkasten bzw. elektrische Verteilertafel mit einem Sockel (10), dessen Boden zwei längliche Rippen (12) umfasst, die entlang der zwei Längsränder (11) für die gleitende Montage einer Halterung nach einem der vorausgehenden Ansprüche angeordnet sind.

19. Elektrischer Verteilerkasten bzw. elektrische Verteilertafel nach Anspruch 18, bei dem eine zentrale längliche Rippe (12) vorgesehen ist.

20. Elektrischer Verteilerkasten bzw. elektrische Verteilertafel nach einem der Ansprüche 18 und 19, bei dem der Boden des Sockels (10) zwischen jedem Längsrand und jeder zugeordneten Längsrippe Anzeigemarkierungen der verschiedenen Abstandspositionen der Schienenhalterungen umfasst.

21. Elektrischer Verteilerkasten bzw. elektrische Verteilertafel nach einem der Ansprüche 18 bis 20, **dadurch gekennzeichnet, dass** er Verschlussdeckel umfasst, die in zwei umgekehrten Positionen auf den Sockel montiert werden können.

## Claims

1. A support (100) for supporting a mounting rail for mounting modular electrical equipment, said support comprising firstly mounting means (110, 111) for mounting on the bottom of a base (10) of an electrical panel or box, the mounting means comprising slide means (110) that are adapted to co-operate with complementary slide means (12) that are provided on the bottom of the base (10), and secondly at least two rail-support platforms (101, 103) that are positioned at two different heights, the support being **characterized in that** it includes a channel-section member having an inside that forms a groove (110) that is adapted to slide on a spline (12) that is provided on the bottom of the base (10), and having a top that forms a bottom rail-support platform (103) that is situated on a lateral side of the support.

2. A support (100) according to the preceding claim, **characterized in that** said mounting means include an elongate through opening (111) through which there passes a threaded shank of a fastener screw (13) that is screw-fastened in the bottom of the base, said elongate through opening (111) being bordered by a rim (111A) on which the head of said fastener screw bears.

3. A support (100) according to claim 2, **characterized in that** said elongate through opening (111) presents a shape that is generally oblong with a wide circular middle portion for passing the head of the fastener screw.

4. A support (100) according to claim 2 or claim 3, **characterized in that** the length of said elongate through opening (111) corresponds to the movement stroke of the support (100) over the bottom of the base (10).

5. A support (100) according to claim 4, **characterized in that** said elongate through opening (111) presents a length that is equal to 25 mm.

6. A support (100) according to one of preceding claims, **characterized in that** it includes indexer means for indexing its position on the bottom of the base.

7. A support (100) according to claim 6, **characterized in that** said indexer means comprise a lug (112) that is adapted to be engaged resiliently in a notch that is provided in the bottom of the base.

8. A support (100) according to one of preceding claims, **characterized in that**, on an outer face, it carries an arrow (107) that indicates its position on the bottom of the base.

9. A support (100) according to one of preceding claims, **characterized in that**, on one edge, it carries at least one loop (104) for threading a clamping collar for clamping electric cables.

10. A support (100) according to one of preceding claims, **characterized in that** it includes three rail-support platforms (101, 102, 103) that are positioned at three different heights, namely a top platform (101), an intermediate platform (102), and a bottom platform (103).

11. A support (100) according to claim 10, **characterized in that** the intermediate platform (102) is situated on one lateral side of the support, while the bottom platform (103) is situated on the opposite other lateral side of the support.

12. A support according to one of preceding claims, **characterized in that** the top platform (101) is situated at the top of an arch (106).

13. A support (100) according to one of preceding claims, **characterized in that** positioner means are provided for positioning rails on said platforms.

14. A support (100) according to claim 13, **characterized in that** said positioner means comprise lateral guide means and axial abutment means.

15. A support (100) according to claim 14, **characterized in that** said lateral guide means comprise two lateral spines (101B, 102B, 103A) that are positioned on either side of a tapped hole (101A, 102A) for screw-fastening a fastener screw (14).

16. A support (100) according to claim 14 or claim 15, **characterized in that** the axial abutment means comprise a tab (105) or an abutment wall that is situated on an edge of each platform.

17. A support (100) according to one of preceding claims, **characterized in that** it is formed as a single part by molding a plastics material.

18. An electrical panel or box including a base (10) having a bottom that is provided with two longitudinal splines (12) that are arranged along two longitudinal edges (11) for slidably mounting a support according to one of preceding claims.

19. A panel or box according to claim 18, wherein a central longitudinal spline (12) is provided.

20. A panel or box according to claim 18 or claim 19, wherein, between each longitudinal edge and each associated longitudinal spline, the bottom of the base (10) includes indicator marks for indicating various positions for spacing apart the rail supports.

21. A panel or box according to any one of claims 18 to 20, **characterized in that** it includes closure caps that are adapted to be mounted in two inverted positions on said base.
